# EUROPEAN PATENT SPECIFICATION

(11) **EP 2 887 235 B1**
(45) Date of publication and mention of the grant of the patent: **04.11.2020**
(21) Application number: 14157522.5
(22) Date of filing: 03.03.2014
(51) Int. Cl.: G06F 16/215

(54) **System and method for optimizing memory utilization in a database**
System und Verfahren zur Optimierung der Speichernutzung in einer Datenbank
Système et procédé permettant d'optimiser l'utilisation de la mémoire dans une base de données

(30) Priority: 23.12.2013 IN 4013MU2013
(43) Date of publication of application: 24.06.2015
(73) Proprietor: Tata Consultancy Services Limited, 400021 Maharashtra (IN)
(72) Inventor: Bandyopadhyay,, Avinandan, 700091 West Bengal (IN)
(74) Representative: Potter Clarkson

(56) References cited:
- US-A1- 2007 083 923
- US-B1- 8 447 730
- LEO WHITE ET AL: "Concise Analysis Using Implication Algebras for Task-Local Memory Optimisation", 20 June 2013 (2013-06-20), STATIC ANALYSIS, SPRINGER BERLIN HEIDELBERG, BERLIN, HEIDELBERG, PAGE(S) 433 - 453, XP047032304, ISBN: 978-3-642-38855-2 * the whole document *

## Description

### TECHNICAL FIELD

The present subject matter described herein, in general, relates to a database management, more particularly, a system and method for optimizing memory utilization of the database.

### BACKGROUND

Providing databases are a common mechanism for storing and managing information in a form of data. In today's Information technology (IT) environment, the volume of the data is increasing day by day and thus, managing such huge data in the database has become a challenge in database management systems. The data stored in the databases are used for performing informative analysis. Specially, during performance monitoring, huge amount of data is required for performing such analysis like trend analysis, prediction analysis and other types of data analysis. While performing such analysis, the huge amount of data flowing across a network in the IT environment is required to be securely stored and managed in the databases. In terms of the performance monitoring, the data may be like number of processes active at any point, Central Processing Unit (CPU) utilization, free virtual memory and other types of monitoring data.

Sometimes, the data may exceed in gigabytes (GBs) and terabytes (TBs), and hence handling the huge data become tedious. Moreover, the data may be received in the databases from various sources and also in a continuous fashion. Thus, managing such continuous data in the database in a real time is another challenge. Since, the data occupies space in terms of bits and bytes a space crunch situation is created in the databases. Thus, optimizing the memory utilization of the databases for storing maximum data without compromising with data integrity is a critical issue. US8447730B1 discloses a probe system for one or more replicas.

### SUMMARY

The invention is defined by the features of the independent claims. Further embodiments are the subject-matter of the dependent claims. This summary is provided to introduce aspects related to systems and methods for optimizing memory utilization in a database and the concepts are further described below in the detailed description. This summary is not intended to identify essential features of the claimed subject matter nor is it intended for use in determining or limiting the scope of the claimed subject matter.

In one implementation, a system for optimizing memory utilization in a database capable of storing a plurality of quantitative values in a computer network is disclosed. The system comprises a memory and a processor coupled to the memory, said processor is configured to execute instructions stored in the memory to perform processor implemented steps. One of the processor implemented step may be to designate a first quantitative value of the plurality of quantitative values as a first epoch. The plurality of quantitative values may be associated with a plurality of tuples such that each quantitative value has a corresponding tuple and each tuple may comprise a delta value, an epoch, and a time stamp. The processor implemented steps may comprise to compare a second quantitative value with the first epoch in order to determine a difference D1 between the second quantitative value and the first epoch. On basis of the comparison, the processor implemented steps may further comprises to perform one of:
(A) storing the difference D1 as a delta value in a tuple T2 when an absolute value of the difference D1 is less than a threshold, wherein the tuple T2 corresponds to the second quantitative value; OR
(B) designating the second quantitative value as a second epoch.

Further, the processor implemented steps may comprise to define a threshold for the second quantitative value of the plurality of quantitative values. In other example embodiments of present subject matter, the threshold may be predefined.

Further, the processor implemented steps may comprise to generate a master tuple by comparing epoch and delta value of tuple T1 and the tuple T2. The tuple T1 may correspond to the first quantitative value. Further, the master tuple is stored in the database and the master tuple may be an indicative of at least one of the first quantitative value and the second quantitative value. Thus, the master tuple facilitates the optimization of the memory utilization in the database.

In another implementation, a method for optimizing memory utilization in a database capable of storing a plurality of quantitative values in a computer network is disclosed. The method comprises designating a first quantitative value of the plurality of quantitative values as a first epoch. Further, the plurality of quantitative values may be associated with a plurality of tuples such that each quantitative value has a corresponding tuple and each tuple may comprise a delta value, an epoch, and a time stamp. The method may comprise comparing a second quantitative value with the first epoch in order to determine a difference D1 between the second quantitative value and the first epoch. On the basis of comparison, the method may further comprises to perform one of:
(A) storing the difference D1 as a delta value in a tuple T2 when an absolute value of the difference D1 is less than a threshold, wherein the tuple T2 corresponds to the second quantitative value; OR
(B) designating the second quantitative value as a second epoch.

The method may further comprise defining a threshold for the second quantitative value of the plurality of quantitative values. Further, according to one or more example embodiments of present subject matter, the threshold may be predefined.

The method may further comprise generating a master tuple by comparing epoch and delta value of tuple T1 and the tuple T2. The tuple T1 may correspond to the first quantitative value. Further, the master tuple is stored in the database and the master tuple may be an indicative of at least one of the first quantitative value and the second quantitative value. Thus, the master tuple facilitates the optimization of the memory utilization in the database.

Yet in another implementation, computer program product having embodied thereon a computer program for optimizing memory utilization in a database capable of storing a plurality of quantitative values in a computer network is disclosed. The computer program product comprises a set of instructions, the instructions comprising instruction for designating a first quantitative value of the plurality of quantitative values as a first epoch. Further, the plurality of quantitative values may be associated with a plurality of tuples such that each quantitative value has a corresponding tuple and each tuple may comprise a delta value, an epoch, and a time stamp. Further, a set of instructions may be provided for comparing the second quantitative value with the first epoch in order to determine a difference D1 between the second quantitative value and the first epoch. On basis of comparison, a set of instructions may be provided for performing one of:
(A) storing the difference D1 as a delta value in a tuple T2 when an absolute value of the difference D1 is less than a threshold, wherein the tuple T2 corresponds to the second quantitative value; OR
(B) designating the second quantitative value as a second epoch.

Further, a set of instructions may be provided for defining a threshold for the second quantitative value of the plurality of quantitative values. Further, according to one or more example embodiments of present subject matter, the threshold may be predefined.

Further, a set of instructions may be provided for generating a master tuple by comparing epoch and delta value of tuple T1 and the tuple T2. The tuple T1 may correspond to the first quantitative value. Further, the master tuple is stored in the database and the master tuple may be an indicative of at least one of the first quantitative value and the second quantitative value. Thus, the master tuple facilitates the optimization of the memory utilization in the database.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1 illustrates a network implementation of a system for optimizing memory utilization in a database is shown, in accordance with an embodiment of the present subject matter.
Figure 2 illustrates the system, in accordance with an embodiment of the present subject matter.
Figure 3 and 4 in-part illustrates a working of the system, in accordance with an embodiment of the present subject matter.
Figure 5 and 6 in-part illustrates a working of the system, in accordance with an embodiment of the present subject matter.
Figure 7 illustrates a method for optimizing memory utilization in a database capable of storing a plurality of quantitative values, in accordance with an embodiment of the present subject matter.
Figure 8 illustrates a method for comparing remaining quantitative values, in accordance with one embodiment of the present subject matter.
Figure 9 illustrates a method for comparing remaining quantitative values, in accordance with another embodiment of the present subject matter.

### DETAILED DESCRIPTION

Systems and methods for optimizing memory utilization in a database are described. The database may be capable for storing and managing huge data flowing across a network. Due to the huge volume of the data, a space crunch situation may be created in the database. For meeting such space crunch situation, the present subject matter discloses a mechanism for storing one or more delta values instead of the data. To achieve the purpose of memory utilization in the database, a threshold may be used for comparing and storing data-set streaming into the database. According to aspects of present subject matter, a first data of the data-set may be set as a first epoch. Upon setting the epoch, remaining data of the data-set streaming into the database after the first data may be compared with the first epoch. The comparison may be performed for determining a difference between the data of the remaining data with the first epoch.

On basis of the comparison, if an absolute value of the difference is determined to be lesser than the threshold, the difference may be stored in a tuple associated with the data (the data which is compared with the first epoch). Further, if the absolute value of the difference is determined to be equal or greater than the threshold, the data may be designated as a next epoch. The comparison may be performed for each data of the remaining data streaming into the database. Also, at each comparison, a tuple may be created for each data of the data-set. The tuple created may comprise the difference (i.e., a delta value), a reference (i.e., an epoch), and a time-stamp. Thus, after the comparison performed, a plurality of tuples may be created which are further processed for optimizing the database.

In order to further optimize the database, the plurality of tuples may be compared with each other. According to aspects of present subject matter, each tuple of the plurality of tuples may be compared with its successive tuple. During the comparison, the difference stored as the delta value and the reference (i.e., an epoch) of two successive tuples are compared. If nothing is found during the comparison (i.e., no difference is determined between the delta values and the epochs of the two successive tuples), the next successive tuples of the plurality of tuples are compared. Further, if the difference is found between the delta values and/or the epochs of the next successive tuples, a master tuple may be created and stored in the database. The master tuple created may facilitate to optimize the memory utilization of the database by avoiding repeated values to be stored into the database. According to embodiments of present subject matter, two successive tuples may be chosen sequentially or randomly from the plurality of tuples for comparison.

While aspects of described system and method for optimizing memory utilization in a database may be implemented in any number of different computing systems, environments, and/or configurations, the embodiments are described in the context of the following exemplary system.

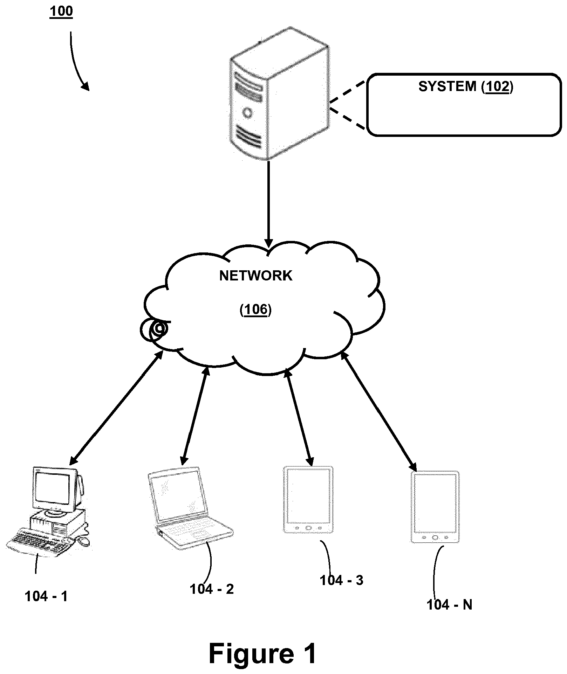

Referring now to Figure 1, a network implementation 100 of a system 102 for optimizing memory utilization in a database is illustrated, in accordance with an embodiment of the present subject matter. The database may be capable for storing plurality of quantitative values. In one embodiment, the system 102 may designate a first quantitative value of the plurality of quantitative values as a first epoch. In one embodiment, a threshold may be defined or may be predefined for comparing remaining quantitative values with the first epoch. The remaining quantitative values exclude the first quantitative value designated as the first epoch. In one embodiment, the system 102 may provide comparison of the remaining quantitative values with the epoch to determine a difference. Based upon the comparison, the system 102 may store the difference as a delta value when an absolute value of the difference is determined to be lesser than the threshold. According to embodiments of present subject matter, it may be noted that during the comparison of the quantitative values, the absolute value of the difference is considered rather than the difference itself whereas, while storing the quantitative values as the delta value in the tuple, the difference itself is considered rather than the absolute value of the difference. Further, the system 102 may be configured to designate a quantitative value of the remaining quantitative value as a next epoch when the absolute value of the difference is determined to be equal to or greater than the threshold. For each comparison, a tuple may be created for each quantitative value of the plurality of quantitative values. The tuple may comprise the differences determined as a delta value, a reference as the epoch, and a time stamp. Thus, a plurality of tuples may get created for the plurality of quantitative values after the comparison. According to embodiments of present subject matter, the system 102 further provides comparison of the plurality of tuples amongst each other. According to one embodiment, the system 102 provides comparison of two successive tuples of the plurality of tuples with each other. The comparison may be performed to determine difference between the delta values and the epoch of the two successive tuples. Further, if the difference is found between the delta values and/or the epochs of the two successive tuples during comparison, a master tuple may be created and stored in the database. Once the master tuple is created, the plurality of tuples may be deleted from the database. The master tuple created may facilitate to optimize the memory utilization of the database by avoiding repeated values to be stored into the database.

Although the present subject matter is explained considering that the system 102 is implemented on a server, it may be understood that the system 102 may also be implemented in a variety of computing systems, such as a laptop computer, a desktop computer, a notebook, a workstation, a mainframe computer, a server, a network server, and the like. In one implementation, the system 102 may be implemented in a cloud-based environment. It will be understood that the system 102 may be accessed by multiple users through one or more user devices 104-1, 104-2...104-N, collectively referred to as user devices 104 hereinafter, or applications residing on the user devices 104. Examples of the user devices 104 may include, but are not limited to, a portable computer, a personal digital assistant, a handheld device, and a workstation. The user devices 104 are communicatively coupled to the system 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

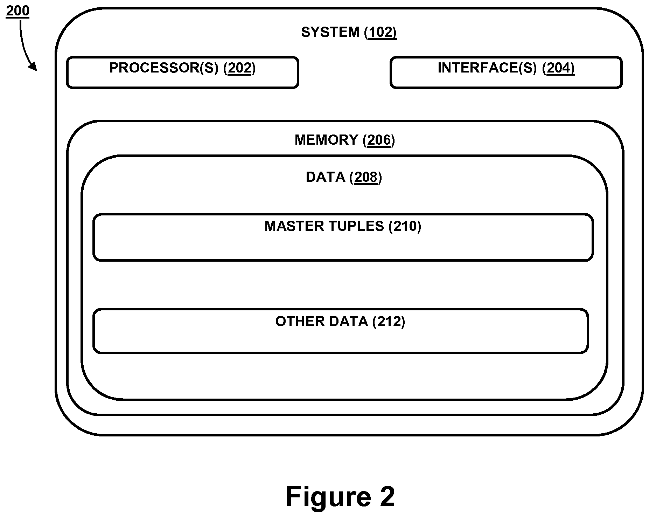

Referring now to Figure 2, the system 102 is illustrated in accordance with an embodiment of the present subject matter. In one embodiment, the system 102 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, the at least one processor 202 is configured to fetch and execute computer-readable instructions stored in the memory 206.

The I/O interface 204 may include a variety of software and hardware interfaces, for example, a web interface, a graphical user interface, and the like. The I/O interface 204 may allow the system 102 to interact with a user directly or through the client devices 104. Further, the I/O interface 204 may enable the system 102 to communicate with other computing devices, such as web servers and external data servers (not shown). The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 may include data 208.

The data 208, amongst other things, serves as a repository for storing data processed, received, and generated by the processor 202. The data 208 may also include master tuples 210, and other data 212. The other data 212 may include data generated as a result of the execution of the processor 202.

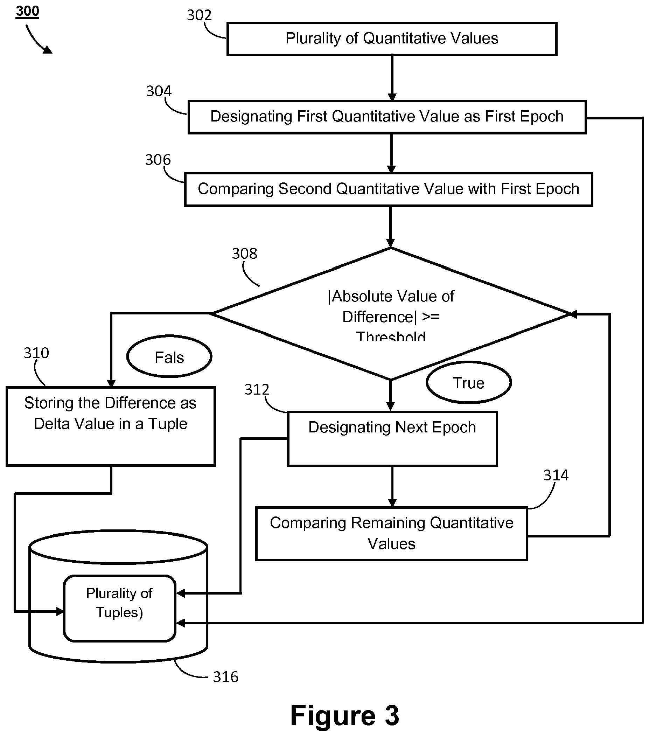

In one implementation, at first, a user may use the client device 104 to access the system 102 via the I/O interface 204. The user may register themselves using the I/O interface 204 in order to use the system 102. The working of the system 102 may be explained in detail in Figures 3, 4, 5 and 6 explained below. The system 102 may be used for optimizing memory utilization in a database.

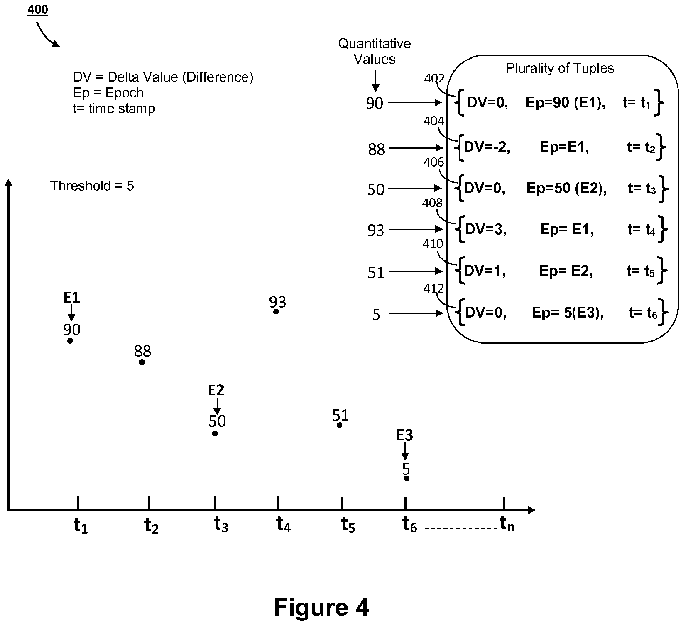

Referring to Figures 3 and 4, a detailed working of system 102 is illustrated in-part, in accordance with an embodiment of the present subject matter. In one implementation, the system 102 may be provided for optimizing memory utilization in a database 316 capable of storing a plurality of quantitative values (block 302). According to an exemplary embodiment of present subject matter, the plurality of quantitative values may be {90, 88, 50, 93, 51, and 5}, as shown in figure 4. At block 304, a first quantitative value (i.e., 90) of the plurality of quantitative values maybe designated as a first epoch (E1). Further, the plurality of quantitative values may be associated with plurality of tuples in such a manner that each quantitative value has a corresponding tuple. Also, each tuple may comprise a delta value (DV), an epoch (Ep), and a time-stamp (t). The tuple 402 of the plurality of tuples corresponds to the first quantitative value (i.e., 90). The tuple 402 comprises a delta value =0, epoch (Ep=90), and time stamp t=t₁.

Further, in the next block 306, a second quantitative value (i.e., 88) of the plurality of quantitative values may be compared with the first epoch E1 (i.e., 90). For comparing the second quantitative value, a threshold may be used. In the present scenario, the threshold is "5". Based on the threshold as "5", the comparison may be performed for determining a difference D1 i.e. the difference between the second quantitative value (i.e. 88) and the first epoch E1 (i.e., 90). According to an embodiment of present subject matter, a method may be provided for defining the threshold for the second quantitative value. Further, according to another embodiment of present subject matter, the threshold may be predefined.

At block 308, the difference D1 may be determined based on the comparison of the second quantitative value "88" and the first epoch "90". From the figure 4, it may be seen that the difference D1 is determined to be "-2" (i.e., difference between 88 and 90 is -2). According to embodiments of present subject matter, when an absolute value of the difference is lesser than the threshold, the difference may be stored as a delta value of corresponding tuple of the quantitative value.

At block 310, as the absolute value of the difference D1 (i.e., 2) is lesser than the threshold (i.e., 5), the difference D1 may be stored as a delta value (DV) in a tuple (T2) corresponding to the second quantitative value (88). Therefore, at the tuple 404 (which corresponds to the second quantitative value), the difference D1 is stored as a delta value (i.e., DV= -2), epoch as E1, and time stamp t as t₂ i.e., tuple T2= {DV=-2, Ep=E1, t= t₂}. Here, the epoch for the second quantitative value is stored as E1 (i.e., the first epoch) because the absolute value of the difference D1 is determined to be lesser than the threshold when second quantitative value is compared with the first epoch E1. Further, according to another embodiment of present subject matter, the second quantitative value may be designated as next epoch i.e., second epoch when the absolute value of the difference D1 is determined to be equal to or greater than the threshold value. But in the present scenario, the absolute value of the difference D1 i.e., 2 is lesser than the threshold and hence, the difference D1 (-2) is stored in the tuple T2 associated with the second quantitative value.

According to one embodiment of present subject matter, when the condition at the block 308 is not satisfied (i.e., the absolute value of the difference is determined to be lesser than the threshold), remaining quantitative values of the plurality of quantitative values are compared with the first epoch E1. The remaining quantitative values exclude the first quantitative value and the second quantitative value i.e., 90 and 88 respectively. Upon comparison of the remaining quantitative values, differences D2 to Dn are determined. A difference Dn may be an indicative of a variation between nth quantitative value and the first epoch E1. According to embodiments of present subject matter, the plurality of quantitative values may stream into the database 316 in a real-time. Further, the differences D2 to Dn may be stored as delta values (DV) in tuples corresponding to the remaining quantitative values when absolute values of the differences D2 to Dn are less than the threshold.

Further, according to another embodiment of present subject matter, when the condition at the block 308 is satisfied (i.e., the absolute value of difference is determined to be equal to or greater than the threshold), the remaining quantitative values are compared with the first epoch E1 and the second epoch E2. On comparison with the first epoch and the second epoch, a first difference and a second difference may be determined respectively. Based on the first difference and the second difference determined, any one of the following steps may be performed:
(A) storing the first difference as a delta value in a tuple Tn corresponding to a quantitative value Qn of the remaining quantitative values when an absolute value of the first difference is less than the threshold and less than an absolute value of the second difference; OR
(B) storing the second difference as a delta value in a tuple Tn corresponding to a quantitative value Qn of the remaining quantitative values when the absolute value of the second difference is less than the threshold and less than the absolute value of the first difference; OR
(C) designating a quantitative value of the remaining quantitative values as a next epoch when the absolute value of the first difference and the absolute value of the second difference are equal to or greater than the threshold.

Thus, at block 314, the remaining quantitative values of the plurality of quantitative values are compared. According to present scenario, as per figure 4, the remaining quantitative values comprise {50, 93, 51, and 5}. In the next step, each of the remaining quantitative values is compared. Thus, a third quantitative value i.e., 50 (which is the first quantitative value of the remaining quantitative value) of the plurality of quantitative values is compared with the first epoch E1 for determining a difference D2. From the figure 4, it may be seen that the difference D2 is determined to be "-40" i.e., (difference between 50 and 90 is - 40). But, an absolute value of the difference D2 is "40" which is greater than the threshold "5". Thus, as per the block 312, the third quantitative value i.e., 50 is designated as the second epoch as E2 (i.e., the next epoch). For the third quantitative value "50", tuple 406 (T3) is created and T3= {DV=0, Ep=50 (E2), t= t₃}.

Now onwards, the comparison of further quantitative values of the remaining quantitative values are done with the first epoch (E1=90) as well as with the second epoch (E2=50). The next quantitative value i.e., the fourth quantitative value "93" is compared with the first epoch (90) and the second epoch (50). On comparison with the first epoch, a difference D3 (first difference) is determined to be "3" (i.e., difference between 93 and 90 is 3). Further, on comparison with the second epoch, the difference D3 (second difference) is determined to be "43" (i.e., difference between 93 and 50 is 43). Thus, as per the step (A) discussed above, the absolute value of the first difference (3) is lesser than the threshold (5) and lesser than the absolute value of the second difference (43). Hence, the first difference (i.e., D3=3) is stored as a delta value (DV) in a tuple 408 corresponding to the fourth quantitative value. Here, the epoch for the fourth quantitative value is stored as E1 (i.e., the first epoch) because the absolute value of the difference D3 is determined to be lesser than the threshold on comparison of the fourth quantitative value with the first epoch E1. Thus, the tuple 408 i.e., T4 comprises the delta value as "3", epoch as E1, and time stamp t as t4.

Similarly, the next quantitative value i.e., the fifth quantitative value "51" is compared with the first epoch (90) and the second epoch (50). On comparison with the first epoch, a difference D4 (first difference) is determined as "-39" (i.e., difference between 51 and 90 is -39). Further, on comparison with the second epoch, the difference D4 (second difference) is determined as "1" (i.e., difference between 51 and 50 is 1). Thus, as per the step (B) discussed above, an absolute value of the second difference (1) is lesser than the threshold (5) and lesser than an absolute value of the first difference (39). Hence, the second difference (i.e., D4=1) is stored as a delta value (DV) along with epoch as E2, and time stamp t as ts in a tuple T5 corresponding to the fifth quantitative value. Hence, it may be noted that on basis of minimal of the absolute value of the first difference and the absolute value of the second difference, the first difference and the second difference is stored as delta value in the tuple when both the absolute value of the first difference and the absolute value of the second difference is lesser than the threshold. Thus, the tuple 410 i.e., T5 comprises {DV=1, Ep= E2, t= t5}. In the present case, the epoch for the fifth quantitative value is stored as E2 (i.e., the second epoch) because the absolute value of the difference D4 is determined to be lesser than the threshold on comparison of the fifth quantitative value with the second epoch E2.

Further, the sixth quantitative value "5" is compared with the first epoch (90) and the second epoch (50). Upon comparing with the first epoch, a difference D5 (first difference) is determined as "-85" (i.e., difference between 5 and 90 is -85). Similarly, on comparison with the second epoch, the difference D5 (second difference) is determined as "-45" (i.e., difference between 5 and 50 is -45). Here, an absolute value of the first difference is "85" and absolute value of the second difference is "45". Thus, as per step (C) discusses above, the absolute value of the first difference (85) and the absolute value of the second difference (45) is greater than the threshold (5). Thus, as per the block 312, the sixth quantitative value "5" is designated as a third epoch as E3 (i.e., the next epoch). For the sixth quantitative value "5", a tuple 412 is created and the tuple 412 i.e., T6 comprises {DV=0, Ep=5 (E3), t= t₆}. Thus, all the tuples from 402 to 412 (i.e., T1 to T6) is stored in a database 316 as the plurality of tuples (as shown in figure 4). Also, the plurality of tuples may be further processed for optimizing the memory utilization in the database 316.

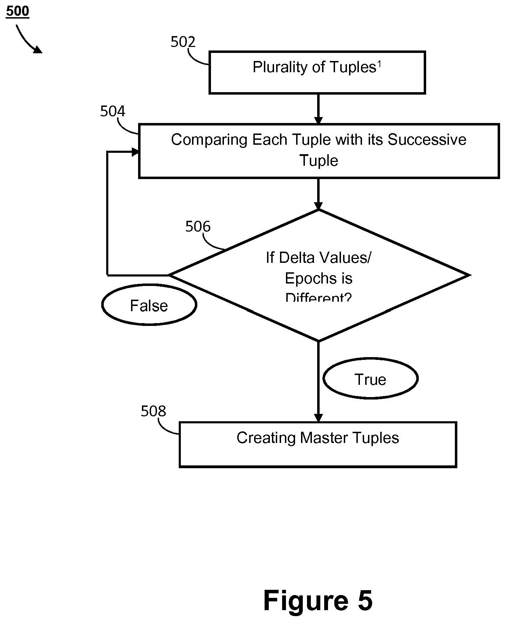

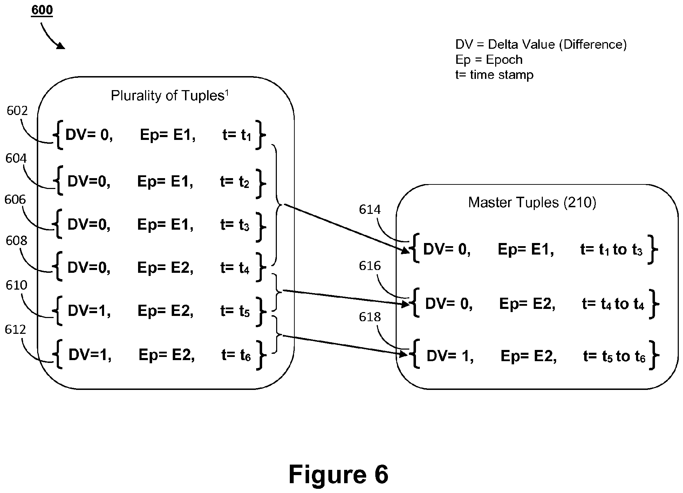

Referring to Figures 5 and 6, a detailed working of system 102 is illustrated in-part, in accordance with an embodiment of the present subject matter. According to embodiments of present subject matter, another set of plurality of tuples¹' is considered in order to understand the present subject matter in a better way. As can be seen from figure 6, the plurality of tuples¹' comprises tuples from 602 to 612 (i.e., different from the plurality of tuples discussed in figure 4). At block 502, the plurality of tuples¹ (602 to 612) is considered for being processed to optimize memory utilization of the database 316.

At block 504, the tuples may be compared in pairs to generate a master tuple corresponding to one or more tuples. Further, the master tuple may be generated by comparing the tuples in the sequential order such that an n^{th} tuple is compared with subsequent tuples in a sequential manner like (n+1)^{th} tuple and so forth. Hence, considering the plurality of tuples¹ of the figure 6, each tuple is compared with its successive tuple. For example, tuple 602 may be compared with tuple 604, tuple 604 may be compared with tuple 606, tuple 606 may be compared with tuple 608, tuple 608 may be compared with tuple 610, and tuple 610 may be compared with tuple 612.

At block 506, the conditions specified are verified for creating the master tuple. According to embodiments of present subject matter, the master is created when any one of the following conditions are met when tuples are compared in pairs:
1. When delta value is same and epoch is different; OR
2. When the delta value is different and the epoch is same; OR
3. When the delta value is different and the epoch is different.

When the tuple 602 is compared with the tuple 604, no difference is found between the delta values and the epochs. Thus, the comparison moves to next tuples sequentially i.e., the tuple 602 and the tuple 606 is now compared. Again, no difference is determined between the delta values and the epochs when the tuples 602 and 606 are compared with each other. Further, the tuples 602 and 608 are compared. On comparing 602 and 608, it is determined that the delta value is same but the epoch value is different (condition 1 as discussed above). Thus, as per block 508, a master tuple 614 is created and the master tuple 614 comprises delta value (DV) as 0, epoch as E1, and time stamp t as t₁ to t₃. Thus, in the master tuple 614, information related to the tuples 602 to 606 are stored.

In the next step, the tuples 608 and 610 are compared. On the comparison, it is determined that the delta value is different but the epoch is same (condition 2 as discussed above). Thus, as per block 508, a master tuple 616 is created and the master tuple 616 comprises delta value as 0, epoch as E2, and time stamp t as t₄ to t₄. Further, the tuple 610 and the tuple 612 are compared. Based on the comparison, no difference is determined between the delta values and the epochs. Thus, a master tuple 618 is created and the master tuple 618 comprises delta value as 1, epoch as E2, and time stamp t as t₅ to t₆. Thus, for the six tuples 602 to 612, only 3 master tuples (614 to 618) are created and stored in the database 316. In such a manner, the system 102 may be enabled to optimize the memory utilization of the database 316.

Exemplary embodiments discussed above may provide certain advantages. Though not required to practice aspects of the disclosure, these advantages may include those provided by the following features.

Some embodiments of present subject matter enable the system 102 and the method for reducing space limitation situation in a database by avoiding repeated values to be stored in the database.

Some embodiments of present subject matter enable the system 102 and the method for optimizing memory utilization of the database.

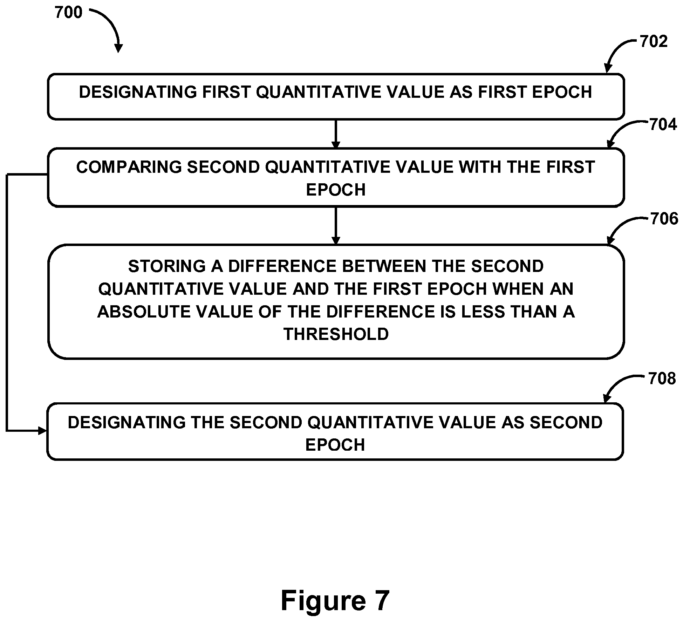

Referring now to Figure 7, a method 700 for optimizing memory utilization in a database capable of storing a plurality of quantitative values is shown, in accordance with an embodiment of the present subject matter. The method 700 may be described in the general context of computer executable instructions. Generally, computer executable instructions can include routines, programs, objects, components, data structures, procedures, modules, functions, etc., that perform particular functions or implement particular abstract data types. The method 700 may also be practiced in a distributed computing environment where functions are performed by remote processing devices that are linked through a communications network. In a distributed computing environment, computer executable instructions may be located in both local and remote computer storage media, including memory storage devices.

The order in which the method 700 is described is not intended to be construed as a limitation, and any number of the described method blocks can be combined in any order to implement the method 700 or alternate methods. Additionally, individual blocks may be deleted from the method 700 without departing from the scope of the subject matter described herein. Furthermore, the method can be implemented in any suitable hardware, software, firmware, or combination thereof. However, for ease of explanation, in the embodiments described below, the method 700 may be considered to be implemented in the above described system 102.

At block 702, a first quantitative value of the plurality of quantitative values may be designated as a first epoch. The plurality of quantitative values may be associated with plurality of tuples in such manner that each quantitative value has a corresponding tuple. Further, the each tuple may comprise a delta value, an epoch, and a time stamp.

At block 704, a second quantitative value may be compared with the first epoch in order to determine a difference between the second quantitative value and the first epoch.

At block 706, the difference determined between the second quantitative value and the first epoch may be stored when an absolute value of the difference is less than a threshold. Further, the difference may be stored as a delta value (DV) in a tuple corresponding to the second quantitative value.

At block 708, the second quantitative value may be designated as a second epoch when the absolute value of the difference is determined to be equal to or greater than the threshold.

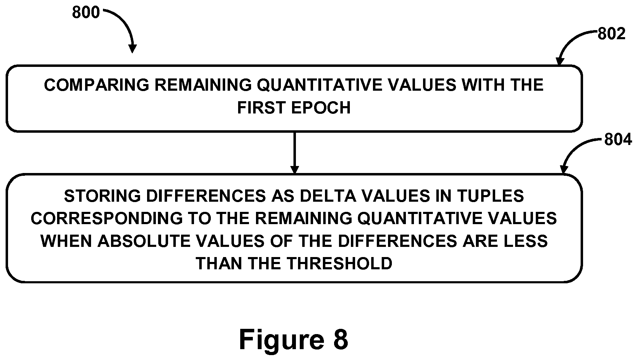

Referring now to Figure 8, a method 800 for comparing remaining quantitative values based on the block 706 (Figure 7) is shown, in accordance with an embodiment of the present subject matter.

At block 802, the remaining quantitative values may be compared with the first epoch in order to determine differences D2 to Dn. A difference Dn may be an indicative of a variation between nth quantitative value and the first epoch. Further, the remaining quantitative values may exclude the first quantitative value and the second quantitative value.

At block 804, the differences D2 to Dn may be stored as delta values in tuples corresponding to the remaining quantitative values when absolute values of the differences D2 to Dn are less than the threshold.

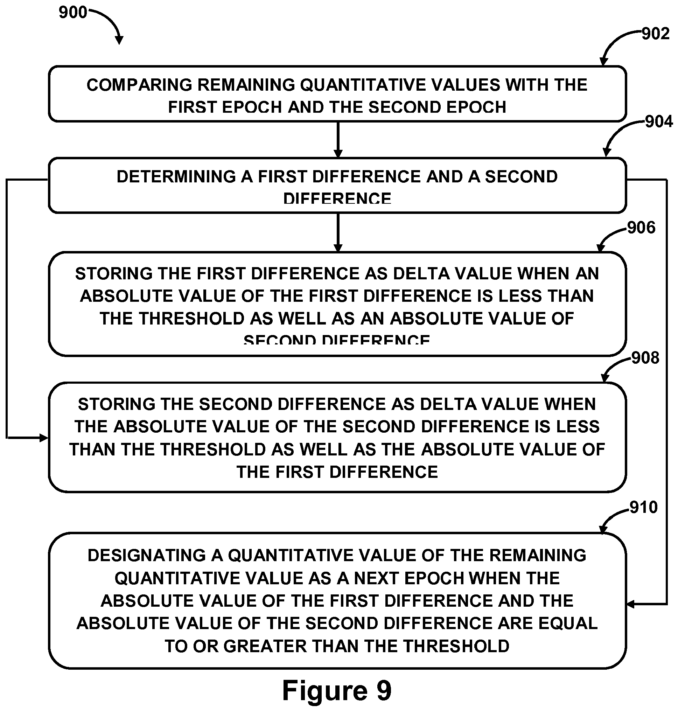

Referring now to Figure 9, a method 900 for comparing remaining quantitative values based on the block 708 (Figure 7) is shown, in accordance with an embodiment of the present subject matter.

At block 902, the remaining quantitative values may be compared with the first epoch and the second epoch. Further, the remaining quantitative values may exclude the first quantitative value and the second quantitative value

At block 904, based on the comparison, a first difference and a second difference may be determined. The first difference correspondence to a difference between each of the remaining quantitative values and the first epoch and the second difference correspondence to a difference between each of the remaining quantitative values and the second epoch.

At block 906, the first difference may be stored as delta value when an absolute value of the first difference is less than the threshold and less than an absolute value of the second difference. Further, the first difference may be stored as the delta value in a tuple Tn corresponding to a quantitative value Qn of the remaining quantitative values.

At block 908, the second difference may be stored as delta value when the absolute value of the second difference is less than the threshold and less than the absolute value of the first difference. Further, the second difference may be stored as the delta value in a tuple Tn corresponding to a quantitative value Qn of the remaining quantitative values.

At block 910, a quantitative value of the remaining quantitative values may be designated as a next epoch when the absolute value of the first difference and the absolute value of the second difference are equal to or greater than the threshold.

Further, after storing the delta values in n number of tuples (i.e., plurality of tuples) on basis of comparison performed at the block 706, 802, and 902, the plurality of tuples may be further processed for optimizing the memory utilization of the database 316. For optimizing the memory utilization, the tuples are compared in sequence to generate a master tuple (210). The master tuple 210 is generated by comparing the tuples in a sequential order such that an n^{th} tuple is compared with an (n+1)^{th} tuple of the plurality of tuples. The detail explanation of the creation of master tuples 210 is explained in figure 5 and 6 by considering plurality of tuples¹, according to an embodiment of present subject matter. The plurality of tuples¹ comprises six tuples 602 to 612. For the six tuples 602 to 612, only 3 master tuples (614 to 618) are created and stored in the database 316. Further, once the master tuples 210 are created and stored in the database 316, the plurality of tuple may be deleted from the database 316. Thus, in such a manner the system 102 is enabled to optimize the memory utilization of the database 316 by avoiding repeated values to be stored in the master tuples 210.

Although implementations for methods and systems for optimizing memory utilization in a database capable of storing a plurality of quantitative values have been described in language specific to structural features and/or methods, it is to be understood that the appended claims are not necessarily limited to the specific features or methods described. Rather, the specific features and methods are disclosed as examples of implementations for optimizing memory utilization in the database.

## Claims

1. A method for optimizing memory utilization in a database capable of storing a plurality of quantitative values, the method comprising:
designating (702), by one or more processors executing programmed instructions stored in a memory, a first quantitative value of the plurality of quantitative values as a first epoch, the plurality of quantitative values associated with a plurality of tuples, the plurality of tuples comprising at least a tuple T1 and a tuple T2, and each of the plurality of tuples comprises a delta value, an epoch, and a time stamp;
determining (704), by the one or more processors, a first difference between a second quantitative value of the plurality of quantitative values and the first epoch;
storing (706), by the one or more processors, the first difference as a delta value associated with a tuple when an absolute value of the first difference is less than a threshold, the tuple T2 corresponding to the second quantitative value;
comparing, by the one or more processors, the second quantitative value of the plurality of quantitative values with the first epoch in order to determine a difference D1 between the second quantitative value and the first epoch;
performing, based on the comparison, one of:
a) storing the difference D1 as a delta value in the tuple T2 when an absolute value of the difference D1 is less than a threshold, wherein the tuple T2 corresponds to the second quantitative value; or
b) designating the second quantitative value as a second epoch when the absolute value of the difference D1 is equal to or greater than the threshold;
generating a master tuple by comparing the epoch and the delta value of the tuple T1 and the tuple T2, wherein the tuple T1 correspond to the first quantitative value, wherein the master tuple is stored in the database, and wherein the master tuple is indicative of at least one of the first quantitative value and the second quantitative value, thereby facilitating the optimization of the memory utilization in the database.

2. The method of claim 1, wherein the master tuple is generated by comparing tuples in a sequential order such that an n^{th} tuple is compared with an (n+1)^{th} tuple.

3. The method of claim 1, further comprising:
determining one or more first remaining differences based on remaining quantitative values of the plurality of quantitative values and the first epoch when the absolute value of the first difference is greater than or equal to the threshold, the remaining quantitative values being separate from the first quantitative value and the second quantitative value;
determining one or more second remaining differences based on the remaining quantitative values of the plurality of quantitative values and the second epoch; and
designating a third quantitative value of the remaining quantitative values as a third epoch when the absolute values of the first remaining differences and the absolute values of the second remaining differences are equal to or greater than the threshold.

4. A system (102) for optimizing memory utilization in a database capable of storing a plurality of quantitative values, the system (102) comprising:
a memory (206);
a processor (202) coupled to the memory (206), wherein the processor (202) is configured to execute instructions stored in the memory (206) to perform:
designating a first quantitative value of the plurality of quantitative values as a first epoch the plurality of quantitative values associated with a plurality of tuples, wherein the plurality of quantitative values are associated with a plurality of tuples comprising at least a tuple T1 and a tuple T2,wherein the plurality of quantitative values are associated with a plurality of tuples such that each quantitative value has a corresponding tuple, and wherein each tuple comprises a delta value, an epoch, and a time stamp;
determining, by the one or more processors, a first difference between a second quantitative value of the plurality of quantitative values and the first epoch;
storing, by the one or more processors, the first difference as a second delta value associated with a second tuple when an absolute value of the first difference is less than a threshold, the tuple T2 corresponding to the second quantitative value;
comparing the second quantitative value of the plurality of quantitative values with the first epoch in order to determine a difference D1 between the second quantitative value and the first epoch;
performing, based on the comparison, one of:
a) storing the difference D1 as a delta value in the tuple T2 when an absolute value of the difference D1 is less than a threshold, wherein the tuple T2 corresponds to the second quantitative value; or
b) designating the second quantitative value as a second epoch when the absolute value of the difference D1 is equal to or greater than the threshold; and
generating a master tuple by comparing the epoch and the delta value of the tuple T1 and the tuple T2, wherein the tuple T1 correspond to the first quantitative value, wherein the master tuple is stored in the database, and wherein the master tuple is indicative of at least one of the first quantitative value and the second quantitative value, thereby facilitating the optimization of the memory utilization in the database.

5. The system (102) of claim 4, wherein the master tuple is generated by comparing tuples in a sequential order such that an n^{th} tuple is compared with an (n+1)^{th} tuple.

6. The system (102) of claim 4, further comprising:
determining one or more first remaining differences based on remaining quantitative values of the plurality of quantitative values and the first epoch when the absolute value of the first difference is greater than or equal to the threshold, the remaining quantitative values being separate from the first quantitative value and the second quantitative value;
determining one or more second remaining differences based on the remaining quantitative values of the plurality of quantitative values and the second epoch; and
designating a third quantitative value of the remaining quantitative values as a third epoch when the absolute values of the first remaining differences and the absolute values of the second remaining differences are equal to or greater than the threshold.

## Patentansprüche

1. Verfahren für das Optimieren der Speicherausnutzung in einer Datenbank, die fähig ist, mehrere quantitative Werte zu speichern, wobei das Verfahren Folgendes umfasst:
Bezeichnen (702), durch einen oder mehrere Prozessoren, die in einem Speicher gespeicherte programmierte Anweisungen ausführen, eines ersten quantitativen Wertes der mehreren quantitativen Werte als eine erste Epoche, wobei die mehreren quantitativen Werte mehreren Tupeln zugeordnet sind, wobei die mehreren Tupel mindestens ein Tupel T1 und ein Tupel T2 umfassen, und jedes der mehreren Tupel einen Delta-Wert, eine Epoche und einen Zeitstempel umfasst;
Bestimmen (704), durch den einen oder die mehreren Prozessoren, einer ersten Differenz zwischen einem zweiten quantitativen Wert der mehreren quantitativen Werte und der ersten Epoche;
Speichern (706), durch den einen oder die mehreren Prozessoren, der ersten Differenz als einen Delta-Wert, der einem Tupel zugeordnet ist, wenn ein Absolutwert der ersten Differenz kleiner als ein Schwellenwert ist, wobei das Tupel T2 dem zweiten quantitativen Wert entspricht;
Vergleichen, durch den einen oder die mehreren Prozessoren, des zweiten quantitativen Wertes der mehreren quantitativen Werte mit der ersten Epoche, um eine Differenz D1 zwischen dem zweiten quantitativen Wert und der ersten Epoche zu bestimmen;
Durchführen, basierend auf dem Vergleich, eines der Folgenden:
a) Speichern der Differenz D1 als einen Delta-Wert in dem Tupel T2, wenn ein Absolutwert der Differenz D1 kleiner als ein Schwellenwert ist, wobei das Tupel T2 dem zweiten quantitativen Wert entspricht; oder
b) Bezeichnen des zweiten quantitativen Wertes als zweite Epoche, wenn der Absolutwert der Differenz D1 gleich dem oder größer als der Schwellenwert ist;
Erzeugen eines Haupttupels durch Vergleichen der Epoche und des Delta-Wertes des Tupels T1 und des Tupels T2, wobei das Tupel T1 dem ersten quantitativen Wert entspricht, wobei das Haupttupel in der Datenbank gespeichert ist, und wobei das Haupttupel den ersten quantitativen Wert und/oder den zweiten quantitativen Wert anzeigt, wodurch die Optimierung der Speicherausnutzung in der Datenbank erleichtert wird.

2. Verfahren nach Anspruch 1, wobei das Haupttupel durch das Vergleichen von Tupeln in einer aufeinanderfolgenden Reihenfolge erzeugt wird, so dass ein n-Tupel mit einem (n+1)-Tupel verglichen wird.

3. Verfahren nach Anspruch 1, das ferner Folgendes umfasst:
Bestimmen einer oder mehrerer erster verbleibender Differenzen, basierend auf den verbleibenden quantitativen Werten der mehreren quantitativen Werte und der ersten Epoche, wenn der Absolutwert der ersten Differenz größer als oder gleich dem Schwellenwert ist, wobei die verbleibenden quantitativen Werte von dem ersten quantitativen Wert und dem zweiten quantitativen Wert getrennt sind;
Bestimmen einer oder mehrerer zweiter verbleibender Differenzen, basierend auf den verbleibenden quantitativen Werten der mehreren quantitativen Werte und der zweiten Epoche; und
Bezeichnen eines dritten quantitativen Wertes der verbleibenden quantitativen Werte als eine dritte Epoche, wenn die Absolutwerte der ersten verbleibenden Differenzen und die Absolutwerte der zweiten verbleibenden Differenzen gleich dem oder größer als der Schwellenwert sind.

4. System (102) zum Optimieren der Speicherausnutzung in einer Datenbank, die fähig ist, mehrere quantitative Werte zu speichern, wobei das System (102) Folgendes umfasst:
einen Speicher (206);
einen Prozessor (202), der an den Speicher (206) gekoppelt ist, wobei der Prozessor (202) konfiguriert ist, Anweisungen, die in dem Speicher (206) gespeichert sind, auszuführen, um Folgendes durchzuführen:
Bezeichnen eines ersten quantitativen Wertes der mehreren quantitativen Werte als eine erste Epoche der mehreren quantitativen Werte, die den mehreren Tupeln zugeordnet sind, wobei die mehreren quantitativen Werte den mehreren Tupeln zugeordnet sind, die mindestens ein Tupel T1 und ein Tupel T2 umfassen, wobei die mehreren quantitativen Werte den mehreren Tupeln zugeordnet sind, so dass jeder quantitative Wert ein entsprechendes Tupel aufweist, und wobei jedes Tupel einen Delta-Wert, eine Epoche und einen Zeitstempel umfasst;
Bestimmen, durch den einen oder die mehreren Prozessoren, einer ersten Differenz zwischen einem zweiten quantitativen Wert der mehreren quantitativen Werte und der ersten Epoche;
Speichern, durch den einen oder die mehreren Prozessoren, der ersten Differenz als einen zweiten Delta-Wert, der dem zweiten Tupel zugeordnet ist, wenn ein Absolutwert der ersten Differenz kleiner als ein Schwellenwert ist, wobei das Tupel T2 dem zweiten quantitativen Wert entspricht;
Vergleichen des zweiten quantitativen Wertes der mehreren quantitativen Werte mit der ersten Epoche, um eine Differenz D1 zwischen dem zweiten quantitativen Wert und der ersten Epoche zu bestimmen;
Durchführen, basierend auf dem Vergleich, eines der Folgenden:
a) Speichern der Differenz D1 als einen Delta-Wert in dem Tupel T2, wenn ein Absolutwert der Differenz D1 kleiner als ein Schwellenwert ist, wobei das Tupel T2 dem zweiten quantitativen Wert entspricht; oder
b) Bezeichnen des zweiten quantitativen Wertes als eine zweite Epoche, wenn der Absolutwert der Differenz D1 gleich dem oder größer als der Schwellenwert ist;
und
Erzeugen eines Haupttupels durch Vergleichen der Epoche und des Delta-Wertes des Tupels T1 und des Tupels T2, wobei das Tupel T1 dem ersten quantitativen Wert entspricht, wobei das Haupttupel in der Datenbank gespeichert ist, und wobei das Haupttupel den ersten quantitativen Wert und/oder den zweiten quantitativen Wert anzeigt, wodurch die Optimierung der Speicherausnutzung in der Datenbank erleichtert wird.

5. System (102) nach Anspruch 4, wobei das Haupttupel durch das Vergleichen von Tupeln in einer aufeinanderfolgenden Reihenfolge erzeugt wird, so dass ein n-Tupel mit einem (n+1)-Tupel verglichen wird.

6. System (102) nach Anspruch 4, das ferner Folgendes umfasst:
Bestimmen einer oder mehrerer erster verbleibender Differenzen, basierend auf den verbleibenden quantitativen Werten der mehreren quantitativen Werte und der ersten Epoche, wenn der Absolutwert der ersten Differenz größer als oder gleich dem Schwellenwert ist, wobei die verbleibenden quantitativen Werte von dem ersten quantitativen Wert und dem zweiten quantitativen Wert getrennt sind;
Bestimmen einer oder mehrerer zweiter verbleibender Differenzen, basierend auf den verbleibenden quantitativen Werten der mehreren quantitativen Werte und der zweiten Epoche; und
Bezeichnen eines dritten quantitativen Wertes der verbleibenden quantitativen Werte als eine dritte Epoche, wenn die Absolutwerte der ersten verbleibenden Differenzen und die Absolutwerte der zweiten verbleibenden Differenzen gleich dem oder größer als der Schwellenwert sind.

## Revendications

1. Procédé permettant d'optimiser l'utilisation de la mémoire dans une base de données pouvant stocker une pluralité de valeurs quantitatives, le procédé comprenant :
la désignation (702), par un ou plusieurs processeurs exécutant des instructions programmées stockées dans une mémoire, d'une première valeur quantitative de la pluralité de valeurs quantitatives comme première période, la pluralité de valeurs quantitatives étant associée à une pluralité de tuples, la pluralité de tuples comprenant au moins un tuple T1 et un tuple T2, et chaque tuple de la pluralité de tuples comprend une valeur delta, une période et une estampille temporelle ;
la détermination (704), par le ou les processeurs, d'une première différence entre une deuxième valeur quantitative de la pluralité de valeurs quantitatives et la première période ;
le stockage (706), par le ou les processeurs, de la première différence comme valeur delta associée à un tuple lorsqu'une valeur absolue de la première différence est inférieure à un seuil, le tuple T2 correspondant à la deuxième valeur quantitative ;
la comparaison, par le ou les processeurs, de la deuxième valeur quantitative de la pluralité de valeurs quantitatives à la première période afin de déterminer une différence D1 entre la deuxième valeur quantitative et la première période ;
l'exécution, sur la base de la comparaison :
a) du stockage de la différence D1 comme valeur delta dans le tuple T2 lorsqu'une valeur absolue de la différence D1 est inférieure à un seuil, le tuple T2 correspondant à la deuxième valeur quantitative ; ou
b) de la désignation de la deuxième valeur quantitative comme deuxième période lorsque la valeur absolue de la différence D1 est supérieure ou égale au seuil ;
ou
de la génération d'un tuple maître par la comparaison de la période et de la valeur delta du tuple T1 et du tuple T2, le tuple T1 correspondant à la première valeur quantitative, le tuple maître étant stocké dans la base de données, et le tuple maître indiquant la première valeur quantitative et/ou la deuxième valeur quantitative, facilitant ainsi l'optimisation de l'utilisation de la mémoire dans la base de données.

2. Procédé selon la revendication 1, dans lequel le tuple maître est généré par la comparaison des tuples dans un ordre séquentiel, de telle sorte qu'un n^{ième} tuple est comparé à un (n + 1)^{ième} tuple.

3. Procédé selon la revendication 1, comprenant en outre :
la détermination d'une ou de plusieurs premières différences restantes sur la base des valeurs quantitatives restantes de la pluralité de valeurs quantitatives et de la première période lorsque la valeur absolue de la première différence est supérieure ou égale au seuil, les valeurs quantitatives restantes étant distinctes de la première valeur quantitative et de la deuxième valeur quantitative ;
la détermination d'une ou de plusieurs secondes différences restantes sur la base des valeurs quantitatives restantes de la pluralité de valeurs quantitatives et de la deuxième période ; et
la désignation d'une troisième valeur quantitative des valeurs quantitatives restantes comme troisième période lorsque les valeurs absolues des premières différences restantes et les valeurs absolues des secondes différences restantes sont supérieures ou égales au seuil.

4. Système (102) permettant d'optimiser l'utilisation de la mémoire dans une base de données pouvant stocker une pluralité de valeurs quantitatives, le système (102) comprenant :
une mémoire (206) ;
un processeur (202) couplé à la mémoire (206), le processeur (202) étant configuré pour exécuter des instructions stockées dans la mémoire (206) pour effectuer :
la désignation d'une première valeur quantitative de la pluralité de valeurs quantitatives comme première période de la pluralité de valeurs quantitatives associées à une pluralité de tuples, la pluralité de valeurs quantitatives étant associée à une pluralité de tuples comprenant au moins un tuple T1 et un tuple T2, la pluralité de valeurs quantitatives étant associée à une pluralité de tuples, de telle sorte que chaque valeur quantitative a un tuple correspondant, et chaque tuple comprenant une valeur delta, une période et une estampille temporelle ;
la détermination, par le ou les processeurs, d'une première différence entre une deuxième valeur quantitative de la pluralité de valeurs quantitatives et la première période ;
le stockage, par le ou les processeurs, de la première différence comme deuxième valeur delta associée à un second tuple lorsqu'une valeur absolue de la première différence est inférieure à un seuil, le tuple T2 correspondant à la deuxième valeur quantitative ;
la comparaison de la deuxième valeur quantitative de la pluralité de valeurs quantitatives avec la première période afin de déterminer une différence D1 entre la deuxième valeur quantitative et la première période ;
l'exécution, sur la base de la comparaison :
a) du stockage de la différence D1 comme valeur delta dans le tuple T2 lorsqu'une valeur absolue de la différence D1 est inférieure à un seuil, le tuple T2 correspondant à la deuxième valeur quantitative ; ou
b) la désignation de la deuxième valeur quantitative comme deuxième période lorsque la valeur absolue de la différence D1 est supérieure ou égale au seuil ;
et/ou
de la génération d'un tuple maître par la comparaison de la période et de la valeur delta du tuple T1 et du tuple T2, le tuple T1 correspondant à la première valeur quantitative, le tuple maître étant stocké dans la base de données, et le tuple maître indiquant la première valeur quantitative et/ou la deuxième valeur quantitative, facilitant ainsi l'optimisation de l'utilisation de la mémoire dans la base de données.

5. Système (102) selon la revendication 4, dans lequel le tuple maître est généré par la comparaison des tuples dans un ordre séquentiel, de telle sorte qu'un n^{ième} tuple est comparé à un (n + 1)^{ième} tuple.

6. Système (102) selon la revendication 4, comprenant en outre :
la détermination d'une ou de plusieurs premières différences restantes sur la base des valeurs quantitatives restantes de la pluralité de valeurs quantitatives et de la première période lorsque la valeur absolue de la première différence est supérieure ou égale au seuil, les valeurs quantitatives restantes étant distinctes de la première valeur quantitative et de la deuxième valeur quantitative ;
la détermination d'une ou de plusieurs secondes différences restantes sur la base des valeurs quantitatives restantes de la pluralité de valeurs quantitatives et de la deuxième période ; et
la désignation d'une troisième valeur quantitative des valeurs quantitatives restantes comme troisième période lorsque les valeurs absolues des premières différences restantes et les valeurs absolues des secondes différences restantes sont supérieures ou égales au seuil.
